# FASCICULE DE BREVET EUROPEEN

(11) **EP 4 077 986 B1**
(45) Date de publication et mention de la délivrance du brevet: **20.11.2024**
(21) Numéro de dépôt: 20821224.1
(22) Date de dépôt: 14.12.2020
(51) Int. Cl.: F16K 3/08, E21B 34/02, F16K 11/074, F16K 31/54

(54) **VANNE A ORIFICE VARIABLE**
VENTIL MIT VARIABLER ÖFFNUNG
VALVE WITH VARIABLE OPENING

(30) Priorité: 17.12.2019 FR 1914628
(43) Date de publication de la demande: 26.10.2022
(73) Titulaire: TotalEnergies One Tech, 92400 Courbevoie (FR)
(72) Inventeur: DECKER, Sébastien, 76930 Octeville sur Mer (FR)
(74) Mandataire: Fédit-Loriot
(86) Numéro de dépôt international: PCT/EP2020/085895
(87) Numéro de publication internationale: WO 2021/122409

(56) Documents cités:
- EP-A1- 2 354 607
- EP-B1- 0 450 018
- EP-B1- 2 354 607
- WO-A1-91/06795
- WO-A1-91/06795
- US-A- 3 414 007
- US-A- 3 414 007
- US-A- 4 448 214
- US-A- 4 448 214
- US-A- 4 516 606
- US-A- 4 516 606
- US-A1- 2009 205 728
- US-A1- 2009 205 728

## Description

L'invention a pour objet une vanne à orifice variable, notamment pour contrôler le débit et/ou la perte de charge d'un mélange de solides et de fluides tel que celui présent dans un équipement de traitement du pétrole, notamment dans les unités de craquage catalytique.

Dans les procédés pétroliers utilisés dans les raffineries, il est fréquemment souhaitable de contrôler la pression dans une unité de traitement en utilisant des dispositifs à orifices variables sous la forme de vannes à tiroir classiques ou de vannes papillon. Parfois, des disques à orifices fixes sont utilisés conjointement avec des vannes à tiroir ou des vannes papillon pour contrôler la pression d'une unité de traitement ou la pression d'un gaz de combustion acheminé vers un équipement en aval.

On utilise également des vannes comprenant un conduit tubulaire cylindrique et une plaque plane s'étendant transversalement au conduit et solidaire de celui-ci, cette plaque plane étant percée d'un orifice central et d'une pluralité d'orifices périphériques disposés autour de l'orifice central. L'orifice central est équipé d'un volet pivotant (vanne papillon) pour contrôler le débit le traversant. En utilisation, lorsque ces vannes sont disposées de sorte que l'axe de leur conduit soit vertical ou sensiblement vertical, il arrive que les orifices soient obturés en partie ou en totalité par des débris venant de la canalisation dans laquelle est installée la vanne. Il peut s'agir par exemple de débris de revêtements isolants, de revêtements de protection contre l'érosion et/ou de protection contre l'agressivité des gaz corrosifs, selon la nature du fluide circulant. Ce dernier peut en effet être un mélange de solides et de fluides, les solides pouvant induire une érosion, les fluides pouvant être corrosifs et la température à laquelle ils sont transportés peut être très élevée. Ce problème d'obturation est observé pour tout dispositif à orifices fixes.

Le document WO9106795 décrit une soupape à tiroir d'un boîtier de soupape en deux parties. Cette soupape comprend une partie située du côté entrée présentant au moins un raccord d'entrée et une partie située du côté sortie présentant au moins un raccord de sortie. La soupape comprend une pièce de fermeture conçue comme un tiroir disposé dans le boîtier et coopérant du côté entrée, dans le sens de l'écoulement, avec au moins un siège de soupape disposé devant la pièce de fermeture. Le siège de soupape est un anneau d'étanchéité à lèvres en matière élastique dont la lèvre colle radialement à la pièce de fermeture.

Le document EP2354607 décrit également une soupape à tiroir pour contrôler le débit d'un fluide d'un circuit de refroidissement d'un moteur de véhicule automobile. Cette soupape comprend une surface de contact présentant une ouverture ainsi qu'un tiroir reposant contre la surface de contact. Le tiroir est configuré pour libérer l'écoulement de liquide à travers l'ouverture en fonction d'une position du tiroir par rapport à la surface de contact. La soupape comprend en outre un élément de levage qui est configuré pour soulever le tiroir de la surface de contact si une température de l'élément de levage dépasse une température prédéterminée.

Le document US4516606 décrit une vanne à disque pour contrôler le débit d'un mélange de solides et de fluides tel que celui présent dans un équipement de traitement du pétrole. Cette vanne comprend un conduit tubulaire cylindrique, une première plaque plane s'étendant transversalement au conduit et solidaire de celui-ci, cette première plaque plane étant percée d'un orifice central et d'une pluralité d'orifices disposés autour de l'orifice central. La vanne comprend une deuxième plaque plane à orifices s'étendant transversalement au conduit et ayant une pluralité d'orifices dont la taille et l'espacement correspondent aux orifices de la première plaque. Cette deuxième plaque comprend en outre un support tubulaire cylindrique s'étendant au travers de l'ouverture centrale de la première plaque pour suspendre et monter de manière pivotante la deuxième plaque à orifices par rapport à la première plaque et des moyens venant en prise avec un bord périphérique de la deuxième plaque à orifices pour régler en rotation les positions relatives des orifices des première et deuxième plaques à orifices.

Ce type de vanne est également sujet à l'obturation des divers orifices présents. Lorsque le fluide traversant cette vanne contient des particules solides en suspension, ces particules peuvent par ailleurs s'accumuler dans l'espace annulaire entre ses deux plaques. En effet, lorsque les canalisations qui contiennent ce type de vanne sont de grand diamètre (1m et plus), il est très difficile de maintenir les deux plaques constituant la vanne en contact intime et l'espace se créant entre les plaques au niveau des orifices en périphérie est suffisant pour permettre l'entrée de particules solides de petit diamètre. Dans ce cas, le grippage de la vanne peut apparaître, empêchant toute manipulation et régulation du procédé. D'autre part, lorsque les orifices de la plaque supérieure ne sont pas complètement alignés avec ceux de la plaque inférieure, la restriction de passage du fluide a une géométrie telle que le fluide traversant les officies variables est dévié d'une trajectoire « rectiligne » et peut venir impacter les parois de la canalisation, conduisant à une dégradation accélérée de cette dernière à l'endroit de l'impact.

Il existe donc un besoin pour une vanne à orifice variable qui soit moins sujette à l'obturation, notamment due à la chute de débris et au grippage par la présence de particules solides dans le fluide procédé qui la traverse. De même, il est nécessaire d'améliorer la réorientation du fluide en sortie de vanne pour empêcher, ou tout au moins limiter, la dégradation de la canalisation en aval d'un tel dispositif.

A cet effet, un premier objet de l'invention concerne une vanne à orifice variable pour contrôler le débit d'un mélange de solides et de fluides tel que celui présent dans un équipement de traitement du pétrole, comprenant :
- un conduit tubulaire,
- une première plaque plane s'étendant transversalement au conduit et solidaire de celui-ci, cette première plaque plane étant percée d'un orifice central et d'une pluralité d'orifices périphériques disposés de manière circonférentielle autour de l'orifice central,
- une deuxième plaque plane s'étendant transversalement au conduit et montée mobile en rotation à l'intérieur de celui-ci, notamment par rapport à un axe X du conduit tubulaire, la deuxième plaque ayant une pluralité d'orifices dont au moins la forme et l'espacement, éventuellement également la taille, correspondent à ceux des orifices de la première plaque,
- au moins un élément de support supportant la deuxième plaque de manière pivotante par rapport à la première plaque,
- un système de réglage venant en prise avec la deuxième plaque pour régler les positions relatives des orifices périphériques des première et deuxième plaques par rotation de la deuxième plaque, notamment suivant un axe perpendiculaire aux plaques.

Selon l'invention, chaque orifice périphérique de la première plaque est entouré d'une cheminée solidaire de la première plaque et faisant saillie d'une face de celle-ci située du côté opposé à la deuxième plaque.

Ceci permet de limiter l'obturation des orifices surmontés d'une cheminée par des débris tombant sur la première plaque à orifices. En effet, ces débris rebondissent sur ou sont déviés par le bord de la cheminée et tombent sur la première plaque entre les cheminées.

La vanne de la présente invention est généralement utilisée pour contrôler le débit d'un mélange de solides et de fluides tel que celui présent dans un équipement de traitement du pétrole. De tels fluides peuvent conduire à une érosion importante de la vanne ou de la canalisation dans laquelle elle est placée, notamment en cas de défaut d'alignement des orifices, tel qu'expliqué plus haut.

Afin de limiter l'érosion de la vanne ou de la canalisation induite par une déviation du fluide en sortie de la seconde plaque, chaque orifice périphérique de la deuxième plaque peut être entouré d'une cheminée solidaire de la deuxième plaque et faisant saillie d'une face de celle-ci située du côté opposé à la première plaque. Ainsi, un flux arrivant du côté de la première plaque et sortant du côté de la deuxième plaque est guidé par les cheminées solidaires de cette dernière, ce qui permet de redresser sa direction, notamment de le guider suivant une direction perpendiculaire à la direction de la deuxième plaque. Ces cheminées de guidage sont ainsi avantageusement conçues pour guider un flux en sortant dans une direction prédéterminée, de préférence parallèle à un axe du conduit tubulaire de la vanne.

Idéalement, pour assurer un redressage efficace du fluide, la hauteur des cheminées peut avantageusement être supérieure ou égale à trois fois le diamètre interne de passage des orifices qu'elles entourent, et de préférence supérieur ou égal à 5 fois le diamètre interne de passage.

La vanne selon l'invention peut présenter une ou plusieurs des caractéristiques suivantes :
- chaque cheminée peut être formée d'une paroi dont la surface interne s'étend dans le prolongement d'une surface interne de l'orifice qu'elle entoure. Avantageusement, chaque cheminée peut présenter une section interne de même forme et de même dimension que la forme et la dimension de la section interne de l'orifice qu'elle entoure.
- Chaque cheminée peut être formée d'une paroi dont au moins la surface interne s'étend perpendiculairement à la plaque à laquelle elle est solidarisée.
- Pour une réalisation simple, chaque cheminée peut être réalisée d'un seul tenant avec la plaque à laquelle elle est solidarisée.
- Chaque cheminée peut s'étendre sur une hauteur égale à au moins trois fois le diamètre interne de passage de l'orifice périphérique à laquelle elle est solidarisée suivant une direction perpendiculaire à celle-ci.
- Chaque cheminée solidaire de la deuxième plaque peut s'étendre sur une hauteur égale à au moins cinq fois le diamètre interne de l'orifice périphérique auquel elle est solidarisée, suivant une direction perpendiculaire à celle-ci.
- La première plaque peut être pourvue, du côté de sa face dirigée vers la deuxième plaque, d'au moins un éléments d'étanchéité entourant un orifice périphérique de la première plaque, chaque élément d'étanchéité présentant un premier bord solidaire de la première plaque et un deuxième bord libre opposé en contact glissant avec la deuxième plaque, notamment avec sa face en regard de la première plaque. Ceci peut permettre de limiter le passage de particules solides entre les deux plaques. Avantageusement, une surface interne d'élément d'étanchéité la plus proche de l'orifice périphérique entouré s'étend dans le prolongement d'une surface interne de l'orifice entouré, de préférence perpendiculairement à la première plaque. Avantageusement, une surface externe d'élément d'étanchéité la plus éloignée de l'orifice périphérique entouré présente une forme évasée en direction de la deuxième plaque.
- Un élément de support peut être un support tubulaire solidaire de la première plaque et relier de manière étanche aux fluides l'orifice central de la première plaque à l'orifice central de la deuxième plaque. Le support tubulaire permet ainsi le passage du fluide au travers des plaques sans accès à l'espace inter-plaque. Cet agencement permet d'éviter aux particules solides de petite taille éventuellement présentes dans le fluide transporté d'accéder à l'espace inter-plaque et de gripper la rotation de la deuxième plaque.
- les orifices périphériques de chaque plaque peuvent être de dimension inférieure aux orifices centraux.
- les orifices périphériques peuvent être disposés à équidistance les uns des autres et/ou de l'orifice central de la plaque dont ils font partie.

L'invention concerne également une canalisation verticale ou sensiblement verticale destinée à recevoir un fluide en circulation suivant une direction d'écoulement du haut vers le bas, comprenant une vanne selon l'invention, disposée de sorte que le fluide entre par les orifices de la première plaque et sorte par les orifices de la deuxième plaque.

Autrement dit, l'invention concerne également l'utilisation d'une vanne selon l'invention dans une canalisation s'étendant verticalement ou sensiblement verticalement.

Par direction sensiblement verticale, on entend une direction s'écartant d'une direction verticale d'au plus 20°, voire d'au plus 10°.

L'invention est maintenant décrite en référence aux dessins annexés, non limitatifs, dans lesquels :
[Fig. 1] La figure 1 représente schématiquement une vue en coupe longitudinale d'une vanne selon un mode de réalisation de l'invention.
[Fig. 2] La figure 2 représente schématiquement une vue de dessus de la vanne de la figure 1.
[Fig. 3] La figure 3 représente une vue en perspective des deux plaques à orifices assemblées d'une vanne selon un mode de réalisation de l'invention.
[Fig. 4] La figure 4 représente une vue en perspective de dessous de la deuxième plaque à orifices de la figure 3.
[Fig. 5] La figure 5 représente une vue en perspective de dessus de la première plaque à orifices de la figure 3.
[Fig. 6] La figure 6 représente une vue en perspective de deux plaques à orifices superposées d'une vanne selon un autre mode de réalisation de l'invention.
[Fig. 7] La figure 7 représente une vue en coupe axiale d'un élément d'étanchéité selon un mode de réalisation.
[Fig. 8] La figure 8 représente une vue en coupe axiale d'éléments d'étanchéité selon un autre mode de réalisation.

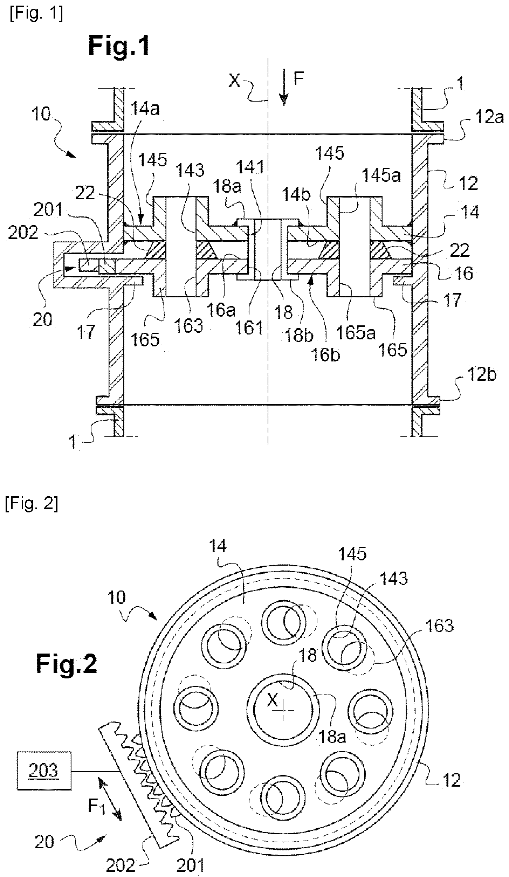

La figure 1 représente une vanne à orifice variable 10 destinée à être utilisée pour contrôler le débit d'un mélange de solides et de fluides tel que celui présent dans un équipement de traitement du pétrole.

La vanne 10 comprend un conduit tubulaire 12 d'axe X destiné à être raccordé à une canalisation 1 dans laquelle la vanne doit être disposée. À cet effet, il présente par exemple deux collerettes 12a, 12b à ses extrémités pouvant être assemblées à des collerettes similaires de la canalisation 1. Alternativement, le conduit tubulaire 12 pourra être soudé bout à bout avec la canalisation principale dans laquelle la vanne sera placée. Les fluides circulent au travers de la vanne 10 suivant une direction parallèle à l'axe X du conduit 12, généralement de haut en bas tel que représenté symboliquement par la flèche F sur la figure 1. Généralement, ce type de conduit tubulaire 12 est de forme cylindrique.

La vanne 10 comporte également une première plaque plane 14 et une deuxième plaque plane 16 qui s'étendent transversalement au conduit 12, c'est-à-dire perpendiculairement à l'axe X du conduit 12, à l'intérieur de celui-ci. La deuxième plaque 16 est montée mobile en rotation autour de l'axe X du conduit 12. Le plus souvent, ces deux plaques sont de mêmes formes et dimensions.

Chaque plaque 14, 16 est percée d'un orifice central 141, 161, respectivement, et d'une pluralité d'orifices périphériques 143, 163, respectivement, disposés de manière circonférentielle autour de l'orifice central 141, 161. Les différents orifices de chacune des première et deuxième plaques correspondent au moins en forme et en espacement, de préférence en taille, en forme et en espacement, de sorte que lorsque les deux plaques 14, 16 sont positionnées l'une au-dessus de l'autre, les centres de leur orifice central coïncident et une rotation des deux plaques par rapport à un axe passant par ces centres permet une superposition plus ou moins importante des orifices périphériques tels que représenté sur la figure 2. Autrement dit, les positions et formes, avantageusement aussi la taille, des différents orifices de chacune des première et deuxième plaques sont telles que ces orifices correspondent, à savoir sont alignés suivant une position perpendiculaire aux plaques, dans au moins une position relative de celles-ci. Ainsi, le réglage de la position relative des deux plaques par rotation autour de l'axe X passant par les centres des orifices centraux 141, 161, permet de moduler, de régler, la section de passage des fluides au travers des orifices périphériques 143, 163.

Dans l'exemple, les orifices périphériques sont de plus petite dimension que les orifices centraux. Les orifices périphériques sont de préférence disposés à équidistance les uns des autres et de l'orifice central qu'ils entourent.

Au moins un élément de support supporte la deuxième plaque 16 de manière pivotante par rapport à la première plaque 14.

On peut ainsi prévoir un élément de support 17 solidaire de la paroi interne du conduit 12 et s'étendant sur toute la périphérie de ce dernier, cet élément de support 17 définissant une surface annulaire sur laquelle peut reposer la deuxième plaque 16 (figure 1). A noter que plusieurs éléments de support 17 solidaires de la paroi interne du conduit 12 peuvent être prévus.

On peut également prévoir, en plus du ou des éléments de support 17 ou à la place de ceux-ci, un élément de support de forme tubulaire 18 solidaire de la première plaque 14 et qui relie de manière étanche aux fluides l'orifice central 141 de la première plaque à l'orifice central 161 de la deuxième plaque, tel que représenté dans l'exemple, afin d'éviter aux particules solides contenues dans le fluide traversant la vanne d'accéder à l'interstice entre les deux plaques par l'orifice central.

Ce support tubulaire 18 peut être fixé de manière étanche à la première plaque 14 par tous moyens appropriés, par exemple par soudage si les deux pièces sont métalliques, ou par rivetage, vissage, etc.

Dans l'exemple, le support tubulaire 18 présente une collerette supérieure 18a reposant sur la face 14a de la première plaque 14 et soudée à cette dernière (fig. 1). Le support tubulaire 18 présente à son autre extrémité une collerette inférieure 18b retenant la deuxième plaque 16 qui est ainsi montée pivotante sur le support tubulaire 18. L'invention n'est bien entendu pas limitée à cet agencement, le support tubulaire 18 pouvant par exemple être fixé à la face 14b de la première plaque autour de son orifice central. Le support tubulaire 18 peut encore être réalisé d'une pièce avec la première plaque, par exemple dans le prolongement de son orifice central et traverser la deuxième plaque. La deuxième plaque peut être montée à rotation sur le support tubulaire au moyen de tout autre moyen ou support autorisant la rotation (palier, patte de support, ...).

La vanne 10 comprend en outre un système de réglage 20 venant en prise avec la deuxième plaque 16 pour régler les positions relatives des orifices périphériques 143, 163 des première et deuxième plaques par rotation de la deuxième plaque, ici autour de l'axe X du conduit 12.

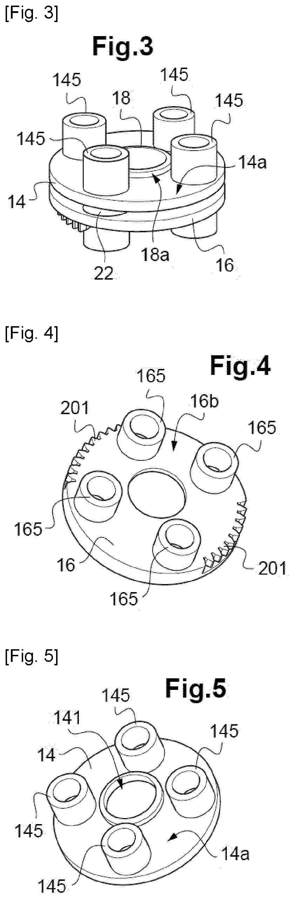

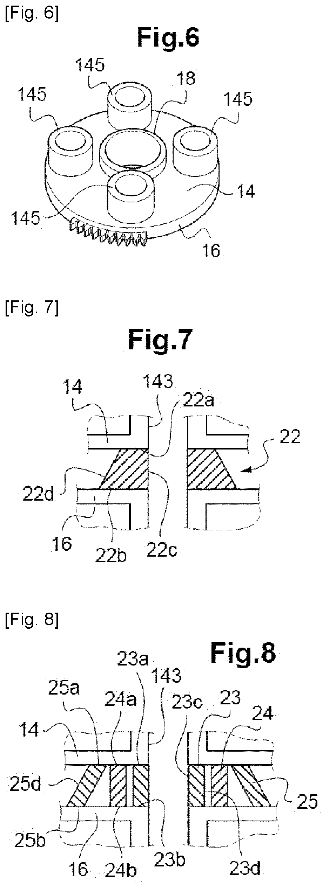

Dans l'exemple représenté sur les figures 1, 2 et 6, ce système de réglage 20 comprend un secteur denté 201 solidaire de la périphérie de la deuxième plaque 16 venant en prise avec les dents d'une crémaillère 202 montée coulissante en translation suivant la direction de la flèche F1 de la figure 2. Le déplacement de cette crémaillère peut être commandé par un organe de déplacement 203 tel qu'un moteur pas à pas, un système de vérins hydrauliques ou tout autre organe approprié. Dans l'exemple des figures 2 et 6, le secteur denté 201 fait saillie de la périphérie de la deuxième plaque 16. Ce secteur denté peut ne pas faire saillie de la périphérie de la deuxième plaque 16, comme dans l'exemple de la figure 4, où les secteurs dentés 201 sont solidaires de la face 16b de la deuxième plaque. Dans les variantes représentées sur les figures 3 et 4, un ou deux secteurs dentés 201 sont solidaires de la face 16b de la deuxième plaque. Les deux secteurs dentés 201 peuvent alors être disposés en des emplacements diamétralement opposés de la deuxième plaque tel que représenté figure 4. L'invention n'est bien entendu pas limitée à une forme particulière du système de réglage, pourvu qu'il permette de faire pivoter la deuxième plaque par rapport à la première plaque.

Selon l'invention, chaque orifice périphérique 143 de la première plaque 14 est entouré d'une cheminée 145 solidaire de la première plaque 14 et faisant saillie d'une face 14a de celle-ci située du côté opposé à la deuxième plaque 16. Dans l'exemple, chaque cheminée 145 est réalisée d'un seul tenant avec la plaque 14. On notera en outre, que chaque cheminée 145 est formée d'une paroi qui présente une section interne de même forme et de même dimension que la forme et la dimension de la section interne de l'orifice périphérique 143 qu'elle entoure. Ces sections internes sont ici des sections suivant des plans perpendiculaires à l'axe X du conduit. Autrement dit, la surface interne 145a de chaque cheminée 145 s'étend dans le prolongement (la continuité) d'une surface interne de l'orifice périphérique 143. Ceci permet d'éviter d'induire une perturbation supplémentaire du flux du fluide traversant la vanne et d'éviter une érosion par les particules solides contenues dans le fluide au niveau de la jonction entre l'orifice et la cheminée associée.

Chaque cheminée 145 s'étend ici suivant une direction perpendiculaire à la première plaque 14, autrement dit parallèle à l'axe X du conduit 12, sur une hauteur prédéterminée. Cette hauteur est par exemple d'au moins trois fois le diamètre interne de passage des orifices périphériques et avantageusement au plus égale à la distance séparant une extrémité du conduit 12 (correspondant dans l'exemple à la collerette 12a) de la face 14a de la première plaque 14. Lorsque ces orifices ne sont pas cylindriques, la hauteur des cheminées peut être déterminée à partir d'un diamètre interne fictif calculé pour une section interne de passage circulaire fictive de même surface que la surface de la section interne de passage de l'orifice.

L'invention n'est bien entendu pas limitée à l'exemple représenté, notamment chaque cheminée 145 pourrait être fixée à la première plaque par tous moyens appropriés, par exemple par soudage, vissage, rivets. En outre, la surface interne 145a de chaque cheminée s'étend ici parallèlement à l'axe X du conduit 12. Bien que cette configuration soit préférable, notamment pour ne pas perturber le flux traversant les orifices périphériques, des configurations dans laquelle les cheminées présentent une forme évasée, par exemple conique, sont envisageables. Des cheminées présentant une section transversale interne parallélépipédique sont également acceptables bien que non préférées.

Dans l'exemple représenté, chaque orifice périphérique 163 de la deuxième plaque à orifices 16 est également entouré d'une cheminée 165 solidaire de la deuxième plaque à orifices et faisant saillie d'une face 16b de celle-ci située du côté opposé à la première plaque à orifices 14.

Comme pour la première plaque 14, dans l'exemple, chaque cheminée 165 est réalisée d'un seul tenant avec la plaque 16. Chaque cheminée 165 présente aussi une section interne de même forme et de même dimension que la forme et la dimension de la section interne de l'orifice périphérique 163 qu'elle entoure. Autrement dit, la surface interne 165a de chaque cheminée 165 s'étend dans le prolongement (la continuité) de la surface interne de l'orifice périphérique 163. Chaque cheminée 165 s'étend ici aussi suivant une direction perpendiculaire à la deuxième plaque 16, autrement dit parallèle à l'axe X du conduit 12, sur une hauteur prédéterminée. Cette hauteur est par exemple d'au moins trois fois le diamètre interne de passage des orifices périphériques, préférablement d'au moins cinq fois le diamètre de passage des orifices périphériques et avantageusement au plus égale à la distance séparant une extrémité du conduit 12 (correspondant dans l'exemple à la collerette 12b) de la face 16b de la deuxième plaque 16. Lorsque ces orifices ne sont pas cylindriques, la hauteur des cheminées peut être déterminée à partir d'un diamètre interne fictif tel que précédemment défini.

De manière similaire, l'invention n'est pas limitée à l'exemple représenté, notamment chaque cheminée 165 pourrait être fixée à la deuxième plaque par tous moyens appropriés, par exemple par soudage, vissage, rivets. En outre, la paroi interne 165a de chaque cheminée s'étend ici parallèlement à l'axe X du conduit 12. Bien que cette configuration soit préférable, notamment pour ne pas perturber le flux traversant les orifices périphériques, des configurations dans laquelle les cheminées présentent une forme évasée, par exemple conique, sont envisageables. Il est toutefois préférable que la paroi interne 165a des cheminées 165 soient orientée de manière à diriger un flux passant par ses cheminées parallèlement à l'axe X, avec éventuellement une tolérance d'écartement à cet axe d'au plus 5°.

Dans l'exemple représenté, la première plaque 14 est en outre pourvue, du côté de sa face 14b dirigée vers la deuxième plaque 16, d'une pluralité d'éléments d'étanchéité 22-25 entourant chacun des orifices périphériques 143 de la première plaque 14. Ces éléments d'étanchéité 22-25 permettent d'assurer l'étanchéité entre les deux plaques, au droit des orifices périphériques de la vanne.

Ces éléments d'étanchéité 22-25 sont avantageusement métalliques.

Un ou plusieurs éléments d'étanchéité peuvent entourer chaque orifice périphérique. Dans l'exemple, un unique élément d'étanchéité 22 (fig.1, 7) ou trois éléments d'étanchéité 23, 24, 25 (fig. 8) peuvent être prévus.

Chaque élément d'étanchéité 22, 23, 24, 25 présente un premier bord 22a, 23a, 24a, 25a solidaire de la première plaque 14 (de la face 14b de celle-ci) et un deuxième bord libre 22b, 23b, 24b, 25b opposé en contact glissant avec la deuxième plaque 16. Un tel contact glissant est défini de manière à ne pas autoriser le passage dans l'espace inter-plaques des particules éventuellement présentes dans le fluide et à autoriser un glissement du ou des éléments d'étanchéité sur la deuxième plaque. Ainsi, lorsque la deuxième plaque pivote par rapport à la première plaque, ces éléments d'étanchéité 22-25 raclent la face 16a de la deuxième plaque située en regard de la première plaque 14 ce qui permet d'éviter que des particules tombées sur cette face 16a, par exemple lorsque les orifices périphériques des deux plaques ne coïncident pas exactement, ne se glissent entre les plaques 14, 16.

Lorsqu'un seul élément d'étanchéité 22 est prévu, sa surface interne 22c s'étend dans le prolongement (la continuité) de la surface interne de l'orifice 143 entouré, de préférence perpendiculairement aux plaques. Ici, cette surface interne 22c présente une section transversale interne de même forme et dimension que la section interne de l'orifice périphérique autour duquel l'élément d'étanchéité est disposé. La surface externe 22d est alors de préférence de forme évasée, ici tronconique, en direction de la deuxième plaque.

Lorsque plusieurs éléments d'étanchéités 23, 24, 25 sont prévus, l'élément d'étanchéité 23 le plus proche de l'orifice périphérique entouré comprend une surface interne 23c s'étendant dans le prolongement (la continuité) de la surface interne de l'orifice entouré, de préférence perpendiculairement aux plaques. Ici, cette surface interne 23c présente une section transversale interne de même forme et dimension que la section interne de l'orifice périphérique autour duquel l'élément d'étanchéité est disposé. La surface externe 23d de l'élément d'étanchéité 23 peut alors être de forme similaire à celle de la surface interne 23c.

L'élément d'étanchéité 25 le plus éloigné de l'orifice périphérique peut alors présenter une surface externe 25d de forme évasée en direction de la deuxième plaque. Sa surface interne 25c est ici de forme similaire à celle de la surface interne 23c et de la surface externe 23d.

On peut prévoir uniquement les deux éléments d'étanchéité 23 et 25 précédemment décrit ou prévoir un ou plusieurs éléments d'étanchéité intermédiaires (un seul 24 dans l'exemple), de forme similaire à l'élément d'étanchéité le plus proche de l'orifice périphérique.

La géométrie du ou des éléments d'étanchéité 22-25 n'est toutefois pas limitée à ces exemples. Notamment, la surface externe d'élément d'étanchéité la plus éloignée de l'orifice périphérique peut être perpendiculaire à la première plaque.

On notera que dans l'exemple représenté les orifices périphériques des première et deuxième plaques sont tous de forme cylindrique. L'invention n'est toutefois pas limitée à une forme particulière d'orifices périphériques lesquels peuvent présenter une forme oblongue, polygonale, par exemple un quadrilatère (forme rectangulaire, trapézoïdale), en arc de cercle ou autre. De manière similaire, la forme des orifices centraux peut présenter une autre forme que cylindrique.

La vanne selon l'invention est particulièrement adaptée pour être utilisée dans une unité de raffinerie telle qu'une unité de craquage catalytique. Ce type de vanne est alors disposé dans des canalisations de diamètre conséquent (de l'ordre de 1 mètre). Les différents éléments de la vanne sont alors en acier, de préférence en acier inoxydable, et éventuellement recouverts d'un revêtement de protection contre l'érosion. Le nombre d'orifices périphériques dépend des dimensions de la vanne et du débit de fluide considéré. Pour l'utilisation précitée, on peut envisager jusqu'à 10 ou 12 orifices.

La vanne selon l'invention pourrait également être utilisée dans toute application dans laquelle des débris entrainés par les fluides sont susceptibles de boucher les orifices à section variable (orifices périphériques).

## Revendications

1. Vanne à orifice variable (10) pour contrôler le débit d'un mélange de solides et de fluides tel que celui présent dans un équipement de traitement du pétrole, comprenant :
- un conduit tubulaire (12),
- une première plaque plane (14) s'étendant transversalement au conduit (12) à l'intérieur du conduit (12) et solidaire de celui-ci, cette première plaque plane étant percée d'un orifice central (141) et d'une pluralité d'orifices périphériques (143) disposés de manière circonférentielle autour de l'orifice central,
- une deuxième plaque plane (16) s'étendant transversalement au conduit (12) à l'intérieur du conduit (12) et montée mobile en rotation à l'intérieur de celui-ci, la deuxième plaque ayant une pluralité d'orifices (161, 163) dont au moins la forme et l'espacement correspondent à ceux des orifices de la première plaque,
- au moins un élément de support (17, 18) supportant la deuxième plaque (16) de manière pivotante par rapport à la première plaque,
- un système de réglage (20) venant en prise avec la deuxième plaque à orifices pour régler les positions relatives des orifices périphériques (143, 163) des première et deuxième plaques par rotation de la deuxième plaque, **caractérisée en ce que** chaque orifice périphérique (143) de la première plaque est entouré d'une cheminée (145) solidaire de la première plaque et faisant saillie d'une face (14a) de celle-ci située du côté opposé à la deuxième plaque.

2. Vanne (10) selon la revendication 1, **caractérisée en ce que** chaque orifice périphérique (163) de la deuxième plaque est entouré d'une cheminée (165) solidaire de la deuxième plaque et faisant saillie d'une face (16b) de celle-ci située du côté opposé à la première plaque à orifices.

3. Vanne (10) selon la revendication 1 ou 2, **caractérisée en ce que** chaque cheminée (145, 165) est formée d'une paroi dont la surface interne s'étend dans le prolongement d'une surface interne de l'orifice qu'elle entoure.

4. Vanne (10) selon l'une quelconque des revendications 1 à 3, **caractérisée en ce que** chaque cheminée (145, 165) est formée d'une paroi dont au moins la surface interne (145a, 165a) s'étend perpendiculairement à la plaque à laquelle elle est solidarisée.

5. Vanne (10) selon l'une quelconque des revendications 1 à 4, **caractérisée en ce que** chaque cheminée (145, 165) est réalisée d'un seul tenant avec la plaque à laquelle elle est solidarisée.

6. Vanne (10) selon l'une quelconque des revendications 1 à 5, **caractérisée en ce que** chaque cheminée (145, 165) s'étend sur une hauteur égale à au moins trois fois le diamètre interne de l'orifice périphérique auquel elle est solidarisée suivant une direction perpendiculaire à celle-ci.

7. Vanne (10) selon l'une quelconque des revendications 2 ou 3 à 5 lorsqu'elles dépendent de la revendication 2, **caractérisée en ce que** chaque cheminée (165) solidaire de la deuxième plaque s'étend sur une hauteur égale à au moins cinq fois le diamètre interne de l'orifice périphérique auquel elle est solidarisée, suivant une direction perpendiculaire à celle-ci.

8. Vanne (10) selon l'une quelconque des revendications 1 à 7, **caractérisée en ce que** la première plaque à orifices (14) est pourvue, du côté de sa face (14b) dirigée vers la deuxième plaque à orifices (16), d'au moins un élément d'étanchéité (22-25) entourant chacun des orifices périphériques (143) de la première plaque (14), chaque élément d'étanchéité (22-25) présentant un premier bord (22a-25a) solidaire de la première plaque à orifices (14) et un deuxième bord libre opposé (22b-25b) en contact glissant avec la deuxième plaque (16).

9. Vanne (10) selon la revendication 8, **caractérisée en ce qu'**une surface interne (22c, 23c) d'élément d'étanchéité la plus proche de l'orifice périphérique entouré s'étend dans le prolongement d'une surface interne de l'orifice entouré, de préférence perpendiculairement à la première plaque (14).

10. Vanne (10) selon la revendication 8 ou 9, **caractérisée en ce qu'**une surface externe (22d, 25d) d'élément d'étanchéité la plus éloignée de l'orifice périphérique entouré présente une forme évasée en direction de la deuxième plaque (16).

11. Vanne (10) selon l'une quelconque des revendications 1 à 10, **caractérisée en ce qu'**un élément de support (18) est un support tubulaire solidaire de la première plaque et reliant de manière étanche aux fluides l'orifice central de la première plaque à l'orifice central de la deuxième plaque.

12. Vanne (10) selon l'une quelconque des revendications 1 à 11, **caractérisée en ce que** les orifices périphériques de chaque plaque sont de dimension inférieure aux orifices centraux.

13. Vanne (10) selon l'une quelconque des revendications 1 à 12, **caractérisée en ce que** les orifices périphériques sont disposés à équidistance les uns des autres et/ou de l'orifice central de la plaque dont ils font partie.

14. Canalisation verticale ou sensiblement verticale destinée à recevoir un fluide en circulation suivant une direction d'écoulement du haut vers le bas, **caractérisée en ce qu'**elle comprend une vanne selon l'une quelconque des revendications 1 à 13, disposée de sorte que le fluide entre par les orifices de la première plaque et sorte par les orifices de la deuxième plaque.

## Patentansprüche

1. Ventil mit variabler Öffnung (10) zur Kontrolle der Durchflussmenge eines Gemisches aus Feststoffen und Fluiden, wie jenes, das in einer Ausrüstung zur Verarbeitung von Rohöl vorhanden ist, umfassend:
- eine rohrförmige Leitung (12),
- eine erste ebene Platte (14), die sich quer zur Leitung (12) im Inneren der Leitung (12) und fest mit dieser verbunden erstreckt, wobei diese erste ebene Platte mit einer zentralen Öffnung (141) und mit einer Vielzahl von peripheren Öffnungen (143) angebohrt ist, die umfänglich um die zentrale Öffnung herum angeordnet sind,
- eine zweite ebene Platte (16), die sich quer zur Leitung (12) im Inneren der Leitung (12) und drehbeweglich im Inneren derselben montiert ist, wobei die zweite Platte eine Vielzahl von Öffnungen (161, 163) aufweist, von denen zumindest die Form und der Abstand jenen der Öffnungen der ersten Platte entsprechen,
- mindestens ein Trägerelement (17, 18), welches die zweite Platte (16) in Bezug auf die erste Platte schwenkbar trägt,
- ein Einstellsystem (20), welches in Eingriff mit der zweiten Platte mit Öffnungen steht, um die Positionen der peripheren Öffnungen (143, 163) der ersten und zweiten Platte zueinander durch Drehen der zweiten Platte einzustellen,
**dadurch gekennzeichnet, dass** jede periphere Öffnung (143) der ersten Platte von einem Schacht (145) umgeben ist, der fest mit der ersten Platte verbunden ist, und auf einer Seite (14a) derselben, die sich auf der der zweiten Platte gegenüberliegenden Seite befindet, hervorsteht.

2. Ventil (10) nach Anspruch 1, **dadurch gekennzeichnet, dass** jede periphere Öffnung (163) der zweiten Platte von einem Schacht (165) umgeben ist, der fest mit der zweiten Platte verbunden ist, und auf einer Seite (16b) derselben, die sich auf der der ersten Platte mit Öffnungen gegenüberliegenden Seite befindet, hervorsteht.

3. Ventil (10) nach Anspruch 1 oder 2, **dadurch gekennzeichnet, dass** jeder Schacht (145, 165) aus einer Wand gebildet ist, deren Innenoberfläche sich in der Fortsetzung einer Innenoberfläche der Öffnung, die sie umgibt, erstreckt.

4. Ventil (10) nach einem der Ansprüche 1 bis 3, **dadurch gekennzeichnet, dass** jeder Schacht (145, 165) aus einer Wand gebildet ist, von der sich zumindest die Innenoberfläche (145a, 165a) senkrecht zur Platte, mit der sie fest verbunden ist, erstreckt.

5. Ventil (10) nach einem der Ansprüche 1 bis 4, **dadurch gekennzeichnet, dass** jeder Schacht (145, 165) zusammenhängend mit der Platte, mit der sie fest verbunden ist, hergestellt ist.

6. Ventil (10) nach einem der Ansprüche 1 bis 5, **dadurch gekennzeichnet, dass** sich jeder Schacht (145, 165) über eine Höhe gleich mindestens dem Dreifachen des Innendurchmessers der peripheren Öffnung, mit der sie entlang einer Richtung senkrecht zur selben fest verbunden ist, erstreckt.

7. Ventil (10) nach einem der Ansprüche 2 oder 3 bis 5, wenn sie von Anspruch 2 abhängen, **dadurch gekennzeichnet, dass** sich jeder Schacht (165), der fest mit der zweiten Platte verbunden ist, über eine Höhe gleich mindestens dem Fünffachen des Innendurchmessers der peripheren Öffnung, mit der sie entlang einer Richtung senkrecht zur selben fest verbunden ist, erstreckt.

8. Ventil (10) nach einem der Ansprüche 1 bis 7, **dadurch gekennzeichnet, dass** die erste Platte mit Öffnungen (14) auf Seiten ihrer Seite (14b) die zur zweiten Platte mit Öffnungen (16) gerichtet ist, mit mindestens einem Dichtelement (22-25) versehen ist, das jede der peripheren Öffnungen (143) der ersten Platte (14) umgibt, wobei jedes Dichtelement (22-25) einen ersten Rand (22a-25a) aufweist, der fest mit der ersten Platte mit Öffnungen (14) verbunden ist, und einen zweiten freien gegenüberliegenden Rand (22b-25b) in gleitendem Kontakt mit der zweiten Platte (16).

9. Ventil (10) nach Anspruch 8, **dadurch gekennzeichnet, dass** sich eine Innenoberfläche (22c, 23c) eines Dichtelements, welches der umgebenen peripheren Öffnung am nächsten gelegen ist, in der Fortsetzung einer Innenoberfläche der umgebenen Öffnung, vorzugsweise senkrecht zur ersten Platte (14) erstreckt.

10. Ventil (10) nach Anspruch 8 oder 9, **dadurch gekennzeichnet, dass** eine Außenoberfläche (22d, 25d) eines Dichtelements, das am weitesten von der umgebenen peripheren Öffnung entfernt gelegen ist, eine ausgestellte Form in Richtung der zweiten Platte (16) aufweist.

11. Ventil (10) nach einem der Ansprüche 1 bis 10, **dadurch gekennzeichnet, dass** ein Trägerelement (18) ein rohrförmiger Träger ist, der fest mit der ersten Platte verbunden ist, und die zentrale Öffnung der ersten Platte fluiddicht mit der zentralen Öffnung der zweiten Platte verbindet.

12. Ventil (10) nach einem der Ansprüche 1 bis 11, **dadurch gekennzeichnet, dass** die peripheren Öffnungen einer jeden Platte von geringerer Abmessung als die zentralen Öffnungen sind.

13. Ventil (10) nach einem der Ansprüche 1 bis 12, **dadurch gekennzeichnet, dass** die peripheren Öffnungen im gleichen Abstand zueinander und/oder von der zentralen Öffnung der Platte, der sie angehören, angeordnet sind.

14. Vertikale oder im Wesentlichen vertikale Rohrleitung, die dazu bestimmt ist, ein entlang einer Strömungsrichtung von oben nach unten zirkulierendes Fluid aufzunehmen, **dadurch gekennzeichnet, dass** sie ein Ventil nach einem der Ansprüche 1 bis 13 umfasst, das angeordnet ist, sodass das Fluid durch die Öffnungen der ersten Platte eintritt, und durch die Öffnungen der zweiten Platte austritt.

## Claims

1. Variable-orifice valve (10) for controlling the flow rate of a mixture of solids and fluids such as the one present in equipment for processing petroleum, comprising:
- a tubular pipe (12),
- a first flat plate (14) extending transversely to the pipe (12) inside the pipe (12) and secured thereto, this first flat plate being pierced by a central orifice (141) and by a plurality of peripheral orifices (143) disposed circumferentially around the central orifice,
- a second flat plate (16) extending transversely to the pipe (12) inside the pipe (12) and mounted so as to be able to rotate inside it, the second plate having a plurality of orifices (161, 163) at least the shape and spacing of which correspond to those of the orifices in the first plate,
- at least one support element (17, 18) supporting the second plate (16) pivotably with respect to the first plate,
- an adjustment system (20) coming into engagement with the second plate with orifices to adjust the relative positions of the peripheral orifices (143, 163) in the first and second plates by rotating the second plate,
**characterised in that** each peripheral orifice (143) in the first plate is surrounded by a chimney (145) secured to the first plate and projecting from one face (14a) thereof located on the side opposite to the second plate.

2. Valve (10) according to claim 1, **characterised in that** each peripheral orifice (163) in the second plate is surrounded by a chimney (165) secured to the second plate and projecting from a face (16b) thereof located on the side opposite to the first plate with orifices.

3. Valve (10) according to claim 1 or 2, **characterised in that** each chimney (145, 165) is formed by a wall the internal surface of which extends in line with an internal surface of the orifice that it surrounds.

4. Valve (10) according to any one of claims 1 to 3, **characterised in that** each chimney (145, 165) is formed by a wall at least the internal surface (145a, 165a) of which extends perpendicularly to the plate to which it is secured.

5. Valve (10) according to any one of claims 1 to 4, **characterised in that** each chimney (145, 165) is produced in a single piece with the plate to which it is secured.

6. Valve (10) according to any one of claims 1 to 5, **characterised in that** each chimney (145, 165) extends over a height equal to at least three times the inside diameter of the peripheral orifice to which it is secured in a direction perpendicular thereto.

7. Valve (10) according to any one of claims 2 or 3 to 5 when they are dependent on claim 2, **characterised in that** each chimney (165) secured to the second plate extends over height equal to at least five times the inside diameter of the peripheral orifice to which it is secured, in a direction perpendicular thereto.

8. Valve (10) according to any one of claims 1 to 7, **characterised in that** the first plate with orifices (14) is provided, on the same side as the face thereof (14b) directed towards the second plate with orifices (16), with at least one sealing element (22-25) surrounding each of the peripheral orifices (143) in the first plate (14), each sealing element (22-25) having a first edge (22a-25a) secured to the first plate with orifices (14) and a second opposite free edge (22b-25b) in sliding contact with the second plate (16).

9. Valve (10) according to claim 8, **characterised in that** an internal surface (22c, 23c) of a sealing element closest to the surrounded peripheral orifice extends in line with an internal surface of the surrounded orifice, preferably perpendicularly to the first plate (14).

10. Valve (10) according to claim 8 or 9, **characterised in that** an external surface (22d, 25d) of a sealing element furthest from the surrounded peripheral orifice has a shape splayed in the direction of the second plate (16).

11. Valve (10) according to any one of claims 1 to 10, **characterised in that** a support element (18) is a tubular support secured to the first plate and connecting the central orifice in the first plate to the central orifice in the second plate in a fluidtight manner.

12. Valve (10) according to any one of claims 1 to 11, **characterised in that** the peripheral orifices in each plate have a size less than the central orifices.

13. Valve (10) according to any one of claims 1 to 12, **characterised in that** the peripheral orifices are disposed at equal distances from one another and/or from the central orifice in the plate of which they form part.

14. Vertical or substantially vertical duct intended to receive a fluid circulating in a direction of flow from top to bottom, **characterised in that** it comprises a valve according to any one of claims 1 to 13, disposed so that the fluid enters through the orifices in the first plate and emerges through the orifices in the second plate.
